# EUROPÄISCHE PATENTSCHRIFT

(11) **EP 0 526 552 B1**
(45) Veröffentlichungstag und Bekanntmachung des Hinweises auf die Patenterteilung: **29.12.1993**
(21) Anmeldenummer: 91908758.5
(22) Anmeldetag: 23.04.1991
(51) Int. Cl.: F01N 3/02, B03C 3/14

(54) **VERFAHREN UND VORRICHTUNG ZUR REINIGUNG VON ABGASEN VON PARTIKELN**
PROCESS AND DEVICE FOR REMOVING PARTICLES FROM EXHAUST GASES
PROCEDE ET DISPOSITIF POUR L'EPURATION DE PARTICULES CONTENUES DANS DES GAZ D'ECHAPPEMENT

(30) Priorität: 23.04.1990 AT 937/90
(43) Veröffentlichungstag der Anmeldung: 10.02.1993
(73) Patentinhaber: Fleck, Carl Maria, Dr., 2391 Kaltenleutgeben (AT)
(72) Erfinder: Fleck, Carl Maria, Dr., 2391 Kaltenleutgeben (AT)
(74) Vertreter: Kliment, Peter, Dipl.-Ing.
(86) Internationale Anmeldenummer: AT9100059
(87) Internationale Veröffentlichungsnummer: WO9116528

(56) Entgegenhaltungen:
- EP-A- 0 332 609
- WO-A-85/00408
- WO-A-88/04580
- DE-A- 3 705 979
- FR-A- 1 050 120
- US-A- 4 505 723

## Beschreibung

Die Erfindung betrifft eine Vorrichtung zur Reinigung von Abgasen von Partikeln, insbesonders zur Entfernung von Rußpartikeln aus dem Abgas von luftverdichtenden Brennkraftmaschinen, mit:
- mindestens einem Ionisationskanal, zur Erzeugung negativer Ionen;
- Abscheidekanälen, die im wesentlichen parallel und vorzugsweise koaxial zum Ionisationskanal angeordnet sind, in denen die Partikel an Wänden der Abscheidekanäle angelagert und abgebrannt werden;
- Mitteln zur Erzeugung mindestens eines elektrisches Feldes quer zur Strömungsrichtung der Abgase.

Durch die immer strengeren Emissionsbeschränkungen gewinnt das Problem der Entfernung von Rußpartikeln aus Abgasen immer größere Bedeutung. Insbesonders für Dieselmotore ist die Frage der Partikelemission von entscheidendem Interesse.

Aus der EP-A 332 609 ist ein Verfahren zur Abscheidung und Verbrennung von Rußpartikeln aus Dieselabgasen bekannt, bei dem die Gase zunächst eine Entladungsstrecke durchlaufen und dann durch die Kanäle eines Keramikkörpers strömen, in dem die Abscheidung und Verbrennung der Rußpartikel stattfindet. Ein solches Verfahren ist zwar sehr effizient, jedoch beansprucht der Filter durch die Hintereinanderanordnung von Entladungsstrecke und Abscheidestrecke relativ viel Platz. Gerade beim Einsatz in Kraftfahrzeugen ist jedoch der Bauraum zumeist sehr beschränkt.

Es sind auch Verfahren bekannt, bei denen Abgase durch einen porösen Keramikkörper geführt werden, der die darin enthaltenen Partikel zurückhält. Solche Verfahren sind beispielsweise in den folgenden Druckschriften beschrieben: DE-A 36 38 203, EP-A 212 396, EP-A 270 990, GB-A 2 064 361, US-A 4,662,911. Obwohl durch verschiedene Maßnahmen für eine Entfernung oder Vernichtung der Rußpartikel vorgesorgt wird, weisen solche Filter einen unakzeptabel hohen Strömungswiderstand auf. Insbesonders im Teillastbereich kann es zur Bildung von Rußablagerungen kommen, die einen beträchtlichen Druckverlust bewirken. Solche Konzepte sehen Waben- oder Zellenfilter vor, die aus aneinanderliegenden langen Filterzellen bestehen, die vorzugsweise einen quadratischen Querschnitt besitzen und abwechselnd an der Eintrittsseite und an der Austrittsseite durch einen Pfropfen verschlossen sind. Die zu filternden Abgase können durch die zwei solcher Filterzellen gemeinsame poröse Wand hindurchtreten, während die Aerosole durch die Poren nicht hindurch können und in jener Zelle abgelagert werden, die eingangsseitig offen ist. Diese Filter sind zum Teil aus hochtemperaturfestem Keramikmaterial hergestellt und vorzugsweise mit katalytischen Substanzen beschichtet oder gedopt, sodaß es bei Sauerstoffüberschuß bereits unter 600°C zu einer Verbrennung der abgeschiedenen Rußpartikel kommt. Da diese Temperaturen nur bei Vollgasbetrieb erreicht werden, kommt es in den Perioden dazwischen zu einem erheblichen Aufbau von Gegendruck, der die Motorleistung in unangenehmer Weise reduziert. Dazu kommt eine bleibende Verlegung der Poren durch nicht brennbare metallische Verunreinigungen der Rußpartikel, sodaß es langfristig zu einem irreversiblen Aufbau von Gegendruck am Abgasfilter kommt. Darüberhinaus ergibt sich eine strukturelle Erschöpfung der ausgangsseitigen Abschlußstopfen mit der Einsatzzeit, die zu einer wachsenden Undichtheit des Filters nach längeren Einsatzzeiten führt.

Weiters ist es bekannt, Abgase dadurch zu reinigen, daß zunächst die Rußpartikel durch Anwendung elektrischer Felder zu größerem Teilchen agglomeriert werden, die dann von einem mechanischen Abscheider, wie einem Zyklon, aus dem Abgasstrom abgetrennt werden können. Dies ist etwa in der DE-A 34 24 196 oder in der WO 85/00408 vorbeschrieben. Abgesehen davon, daß solche Vorrichtungen relativ aufwendig sind ist bei einem solchen Verfahren das Problem der Entsorgung der abgeschiedenen Rußpartikel noch nicht gelöst. Es ist inakzeptabel für den Betreiber eines Dieselfahrzeuges in kurzen Abständen Manipulationen an einem Sammelbehälter für Ruß durchführen zu müssen.

Ferner ist es aus der DE-A 33 24 886 bekannt, Partikel unter Ausnutzung eines elektrischen Feldes zunächst zu größeren Teilchen zu agglomerieren und dann in einen Hohlleiter einzusaugen.

Auch hier stellt sich das Problem der endgültigen Entsorgung der abgeschiedenen Partikel. Ein Rückführung in den Ansaugstutzen des Dieselmotors ist wegen des erhöhten Verschleißes, den die Partikel hervorrufen, meist unerwünscht.

Weiters wurde durch die DE-A 38 04 779 eine Vorrichtung zum Entfernen von Rußpartikeln aus dem Abgasstrom einer Dieselbrennkraftmaschine bekannt, bei der in einer Abgasleitung eine Rußpartikelsammelstrecke angeordnet ist. Diese besteht im wesentlichen aus einer Ionisationsstrecke, in der eine ultraviolette Lichtquelle angeordnet ist. Dieser ist eine zentrale Elektrode nachgeordnet, die von zwei konzentrischen Elektroden umgeben ist, von denen die innere mit Durchbrüchen versehen ist. Die zentrale Elektrode liegt an einem gemeinsamen Potential einer Nieder- und einer Hochspannungsquelle, von denen die erstere mit dem zweiten Pol der Niederspannungsquelle und die zweite mit dem zweiten Pol der Hochspannungsquelle verbunden ist. Im Betrieb werden die im Abgasstrom enthaltenen Rußpartikel im Bereich der Ionisationsstrecke aufgeladen und werden im Bereich der zylindrischen Elektroden aufgrund des dort herrschenden Feldes in Richtung zur zentralen Elektrode hin abgelenkt, durchdringen die innere zylinderförmige Elektrode und lagern sich an der innersten Elektrode an. Erreichen die Anlagerungen eine Höhe, bei der sie die innere zylindrische Elektrode berühren so bilden diese einen Kurzschluß für die Niederspannungsquelle und brennen ab. Der Nachteil dieser bekannten Vorrichtung liegt darin, daß es aufgrund des gegenüber der äußeren Elektrode sehr niedrigen Potentiales der inneren zylindrischen Elektrode zu einem Anlegen der Rußpartikel auch an der Außenseite dieser Elektrode kommt, wobei diese Rußpartikel aber kaum Verbrennen könnten und sich bei einer entsprechenden Dicke der Schicht aufgrund mechanischer Einflüsse, wie Vibrationen u.dgl. in größeren Flocken lösen. Um einen ausreichenden Reinigungsgrad der Abgase zu erreichen, ist es daher auch bei dieser Vorrichtung nötig einen mechanischen Abscheider, z.B. einen Zyklonabscheider nachzuordnen, wodurch sich ein entsprechend hoher konstruktiver Aufwand und ein sehr erheblicher Platzbedarf ergibt.

Schließlich zeigt die GB-A 411,807 eine Vorrichtung, bei der zunächst Abgasbestandteile durch elektrische Felder abgeschieden werden, um die Vergiftung des nachfolgenden Katalysators zu vermeiden. Die Entsorgung der abgeschiedenen Abgasbestandteile ist jedoch nicht geklärt.

Die CH-A-372 033 betrifft in wesentlichen ein Elektrofilter. Um den Wirkungsgrad dieses Filters zu verbessern, wird das Abgas zuvor in einem Wärmetauscher gekühlt. In der DE-B-1 080 349 ist ein elektrostatischer Filter beschrieben der mit einem Schalldämpfer gekoppelt ist. Der Schalldämpfer besteht in bekannter Weise aus einer Reihe von Umlenkblechen. Aus der US-A-2 142 128 ist eine elektrische Abscheidevorrichtung bekannt, mit der in einem Gasstrom suspendierte Partikel ausgeschieden werden können. Die durch Schwerkraftwirkung abgeschiedenen Teilchen werden im Sumpf der Vorrichtung gesammelt und von dort abgezogen. Solche Vorrichtungen haben sich im Effekt als nicht effektiv erwiesen.

Aufgabe der Erfindung ist es, diese Nachteile zu vermeiden und ein Verfahren zu schaffen, das es in einfacher Art ermöglicht, Rußpartikel nicht nur abzuscheiden, sondern vollständig zu vernichten, wobei eine lange Standzeit bei weitgehender Wartungsfreiheit gefordert ist.

Erfindungsgemäß sind Mittel zur Umlenkung des Abgasstromes vorgesehen, die die aus dem Ionisationskanal strömenden Gase unter Umkehrung der Strömungsrichtung in die Abscheidekanäle lenken.

Wesentlich ist, daß durch die Umlenkung des Gasstromes eine besonders raumsparende und die elektrische Isolation begünstigende Anordnung des Bauteile im Filter ermöglicht wird. Dies resultiert unter anderem aus der Tatsache, daß es die Umlenkung ermöglicht, die Ein- und Ausströmöffnungen relativ weit von der Hochspannungsdurchführung entfernt anzuordnen.

Bei einer ersten Variante der Erfindung, bei der nur ein elektrisches Feld sowohl für die Ionisation als auch für die Abscheidung vorgesehen ist, ist eine besonders einfache und kostengünstige Konstruktion des Filters möglich. Es ist dabei lediglich ein Paar von Elektroden samt Zuleitungen und Anschlüssen erforderlich. Die Spannung, die das elektrische Feld erzeugt, muß jedoch wegen der doppelten Aufgabe höher gewählt werden.

Bei einer zweiten Ausführungsvariante mit getrennten elektrischen Feldern für die Ionisation und für die Abscheidung können diese elektrischen Felder unabhängig voneinander und optimal für ihre jeweilige Aufgabe eingestellt werden. Außerdem kann jedes Feld für sich eine relativ geringe Potentialdifferenz aufweisen.

Es ist vorteilhaft, wenn die Potentialdifferenz der elektrischen Felder zwischen 3 und 30 kV, vorzugsweise zwischen 5 und 20 kV liegt. Dadurch wird ein optimaler Abscheidegrad bei beherrschbaren Bedingungen erreicht.

Insbesonders ist es günstig für die Abscheidung, wenn die Feldstärke der elektrischen Felder zwischen 100 und 1000 V/mm, vorzugsweise zwischen 200 und 500 V/mm liegt.

Die Langzeitwirksamkeit des erfindungsgemäßen Filters kann dadurch erheblich verbessert werden, daß zeitweise ein Katalysator in luftgetragener Form in den Abgasstrom eingebracht wird. Dies kann im einfachsten Fall betriebsmäßig durch einen mitgeführten Vorratsbehälter erfolgen, aus dem laufzeitgesteuert etwa alle 50 Betriebsstunden des Motors eine gewisse Menge des Katalysators abgegeben wird. Besonders günstig ist es jedoch, wenn der Katalysator eingebracht wird, wenn die Temperatur des Abgasstromes über eine Zeit t hinweg kleiner als A°C ist, wobei t zwischen 20 und 60 Minuten liegt und A kleiner als 500°C, vorzugsweise kleiner als 300°C ist. Gerade durch längeren Betrieb bei niedrigen Temperaturen kann eine Erneuerung der Katalysatorschicht erforderlich werden. Durch die temperaturabhängige Regelung können optimale Abscheidegrade bei niedrigen Zugabemengen des Katalysators erreicht werden.

Besonders geringe Druckverluste werden dadurch ermöglicht, daß sowohl der Ionisationskanal als auch die Abscheidekanäle als beidseitig offene Kanäle in einem einzelnen Keramikkörper angeordnet sind.

Es ist besonders günstig, wenn der Keramikkörper aus einem im wesentlichen gasdichten Material besteht. Dadurch sind die Strömungswege des Abgases wohldefiniert und berechenbar.

Vorzugsweise ist der Keramikkörper im wesentlichen zylindrisch aufgebaut, wobei der Ionisationskanal im Bereich der Zylinderachse angeordnet ist und die Abscheidekanäle um den Ionisationskanal angeordnet sind. Ein solcher Filter kann in den Abmessungen eines herkömmlichen Auspufftopfes hergestellt werden.

Um möglichst wenig elektrische Energie für die Abscheidung zu benötigen ist es erforderlich, daß möglichst geringe Ströme durch die Stege des Keramikkörpers zwischen den Abscheidekanälen fließen.Da die Dicke dieser Stege nicht beliebig klein ausgeführt werden kann, muß man die Abscheidekanäle möglichst breit ausführen. Es ist daher günstig, wenn die Abscheidekanäle einen im wesentlichen rechteckigen Querschnitt aufweisen, wobei die längere Seite quer zur Richtung des elektrischen Feldes orientiert ist und wobei das Verhältnis zwischen Länge und Breite zwischen 4:1 und 10:1 beträgt.

Eine weitere Verringerung der durch den Keramikkörper fließenden elektrischen Ströme kann durch die Verlängerung der Wege erreicht werden, die diese im keramischen Wabenkörper zurücklegen müssen. Vorzugsweise sind daher die Abscheidekanäle zueinander versetzt angeordnet.

Der Wirkungsgrad der Vorrichtung kann dadurch verbessert werden, daß die Wände der Abscheidekanäle mit einem Katalysator beschichtet sind, der die Oxidation von Kohlenwasserstoffen begünstigt. Als Katalysatoren können in bekannter Weise Metalloxidkatalysatoren verwendet werden, wie z.B. solche auf FeO-Basis.

Eine Zusatzfunktion der erfindungsgemäßen Vorrichtung wird dadurch erreicht, daß Teile der Wände der Abscheidekanäle mit einem Katalysator beschichtet sind, der die Oxidation von Kohlenwasserstoffen begünstigt und daß andere Teile der Wände der Abscheidekanäle mit einem weiteren, reduzierenden Katalysator beschichtet sind. Dies wird etwa in der Weise durchgeführt, daß die an der Innenseite des Keramikkörpers liegenden Wandflächen mit dem einen Katalysator beschichtet sind und der andere Katalysator an deren Außenseite aufgebracht ist. Der reduzierende Katalysator kann etwa Stickoxide in Stickstoff und Sauerstoff zerlegen.

Es können zwei Elektroden vorgesehen sein, die folgendermaßen angeordnet sind:
- Im Inneren des Ionisationskanals befindet sich eine vorzugsweise zahnscheibenförmige Sprühelektrode;
- An der äußeren Mantelfläche des Keramikkörpers ist eine an Masse geschaltete Elektrode vorgesehen.

Dies entspricht dem Verfahren mit einem einzigen elektrischen Feld.

Weiters können die Elektroden folgendermaßen angeordnet sein:
- Im Inneren des Ionisationskanals befindet sich eine vorzugsweise zahnscheibenförmige Sprühelektrode;
- An der Wand des Ionisationskanals befindet sich eine an Masse geschaltete Elektrode;
- Zwischen den Abscheidekanälen ist mindestens eine Feldelektrode angeordnet;
- An der äußeren Mantelfläche des Keramikkörpers ist vorzugsweise eine an Masse geschaltete Elektrode vorgesehen.

Diese Ausführungsvariante entspricht einem Verfahren mit zwei unabhängigen elektrischen Feldern.

Es ist günstig, wenn die Sprühelektrode und die Feldelektrode an einem gemeinsamen Potential anliegen. Dadurch ist nur eine Hochspannungdurchführung erforderlich.

Weiters ist es möglich, daß die Elektroden folgendermaßen angeordnet sind:
- Im Inneren des Ionisationskanals befindet sich eine vorzugsweise zahnscheibenförmige Sprühelektrode, die im wesentlichen an Masse geschaltet ist;
- An der Wand des ionisationskanals befindet sich eine an ein positives Hochspannungspotential schaltbare Elektrode;

Auch durch diese Maßnahme ist nur eine Hochspannungdurchführung erforderlich.

Im folgenden wird die Erfindung anhand eines in den Figuren dargestellten Ausführungsbeispieles näher erläutert.

Die Figuren zeigen:
Fig. 1 bis Fig. 5 verschiedene Ausführungsvarianten der Erfindung im Längsschnitt;
Fig. 6 einen Querschnitt durch einen Wabenkörper.

Allen Ausführungsvarianten ist gemeinsam, daß der Abgasfilter aus einem im wesentlichen zylindrischen Gehäuse 1 besteht, das an den Stirnseiten mit Deckeln 2 und 3 abgeschlossen ist. Im Inneren ist ein keramischer Wabenkörper 6 angeordnet, der in seinem Querschnitt kreisringförmig ist. Dieser keramische Wabenkörper 6 kann auch aus mehreren Kreisringsegmenten zusammengesetzt sein. Zentral im Wabenkörper 6 ist der Ionisationskanal 7 angeordnet. In diesen Ionisationskanal 7 ragt die Elektrode 8, die aus einer Vielzahl von Sprühelektroden 8' zusammengesetzt ist.

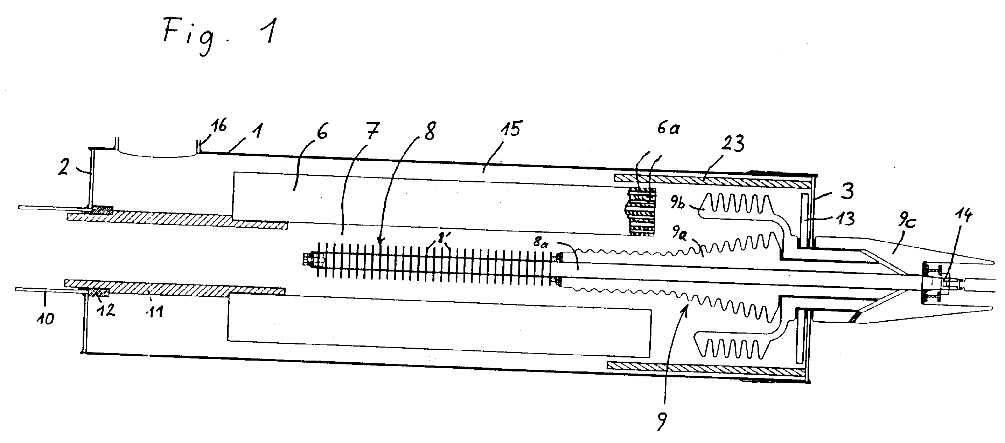

Bei der Ausführungsvariante von Fig. 1 strömt das zu reinigende Gas durch einen im Deckel 2 angeordneten Rohrstutzen 10 in den Filter. In der Verlängerung des Stutzens 10 ist ein Keramikrohr 11 vorgesehen, das an einem Ende mit einer Dichtung 12 gegenüber dem Deckel 2 abgedichtet ist. Am anderen Ende steht das Rohr 11 mit dem Ionisationskanal 7 des Wabenkörpers 6 in Verbindung.

Die Elektrode 8 wird von einer Hochspannungsdurchführung 9 gehalten, die zur Isolierung der Hochspannung führenden Teile gegenüber dem geerdeten Gehäuse 1 samt Deckel 3 dient. Die Hochspannungsdurchführung 9 besteht aus drei keramischen Teilen 9a, 9b und 9c. Der Teil 9a umschließt den Schaft 8a der Elektrode 8 und ist an seinem Umfang mit Rippen ausgestattet, um die Kriechwege des Stroms zu verlängern. Den Teil 9a teilweise umgebend ist der becherförmige Teil 9b vorgesehen, der auch mit Rippen versehen ist. In diesem Teil werden die Gase umgelenkt, sodaß sie weiter durch die Abscheidekanäle 6a strömen. Über Schultern stützen sich die Teile 9a und 9b am Deckel 3 ab, wobei noch eine Isolierscheibe 13 zwischengeschaltet sein kann. Der außen angeordnete Teil 9c der Hochspannungsdurchführung 9 stützt sich auf der Außenseite des Deckels 3 ab. Eine Spannvorrichtung 14 übt eine Zugspannung auf den Schaft der Elektrode 8 aus, sodaß die Teile 9a und 9c der Hochspannungsdurchführung 9 gegeneinander verspannt werden. Die Hochspannungsdurchführung 9 ist in an sich bekannter Weise in der Art und aus dem Material gefertigt, wie dies für Hochspannungsisolatoren üblich ist.

An der Außenseite ist der Keramikkörper 6 mit einer Isolationsschicht 15 versehen, die auch zur Abstützung gegenüber dem Gehäuse 1 dient. Ein Keramikrohr 23 im Bereich der Hochspannungsdurchführung 9 dient zusätzlich zur Isolation. Die gereinigten Abgase verlassen den Filter über einen am Umfang des Gehäuses 1 angeordneten Austrittsstutzen 16.

Wesentlich bei der Ausführungsvariante von Fig. 1 ist, daß nur ein elektrisches Feld erzeugt wird, das zwischen der auf ein negatives Hochspannungspotential gebrachten Elektrode 8 und dem geerdeten Gehäuse 1 aufgebaut wird. Dieses Feld dient sowohl zur Ionisierung im Ionisationskanal 7 als auch zur Abscheidung der Partikel in den Abscheidekanälen 6a.

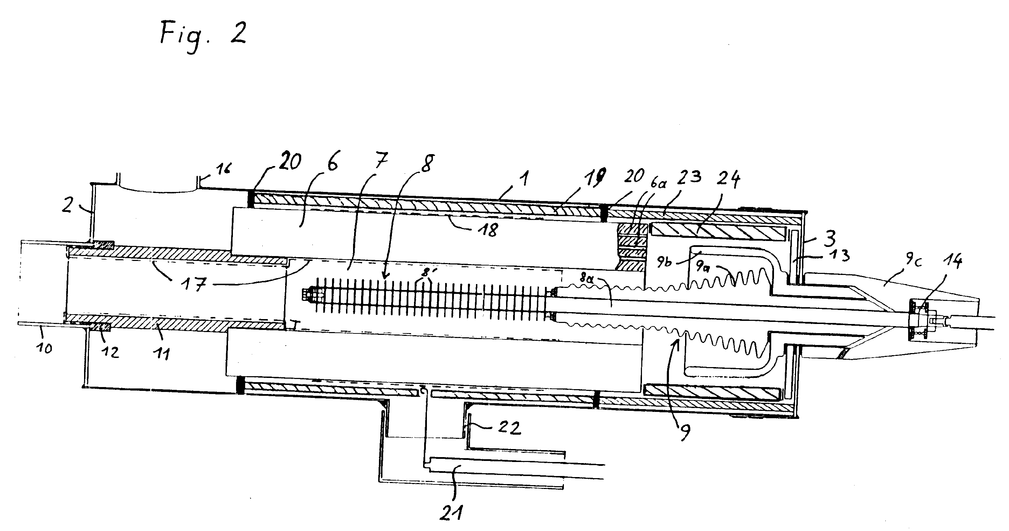

Die Ausführungsvariante von Fig. 2 entspricht von der Konzeption im wesentlichen der oben beschriebenen Variante. Unterschiedlich ist jedoch, daß zur Ionisierung und zur Abscheidung zwei getrennte elektrische Felder vorgesehen sind.

Das Ionisationsfeld wird zwischen der zentralen Elektrode 8 und einer an der Wand des Ionisatioskanals 7 angeordneten, geerdeten Elektrode 17 aufgebaut. Dadurch ist es möglich, die an der Elektrode 8 aufzubringende Spannung geringer als bei der ersten Ausführungsvariante zu wählen. Das Feld zur Abscheidung der Partikel wird zwischen der geerdeten Elektrode 17 und einer am äußeren Umfang des keramischen Wabenkörpers 6 angeordneten weiteren Elektrode 18 erzeugt. Diese Elektrode 18 kann auf negativem oder positivem Potential liegen. Die Isolation gegenüber dem Gehäuse 1 erfolgt über eine Keramikhülse 18 und Dichtungen 19. Die weitere Elektrode 18 wird über eine getrennte Hochspannungszuführung 21, die an einem Stutzen 22 des Gehäuses 1 angebracht ist, mit einem positiven oder negativen Hochspannungspotential gespeist. Im Bereich der Hochspannungsdurchführung 9 ist zur Isolation zusätzlich zum Keramikrohr 23 eine weitere Keramikhülse 24 vorgesehen.

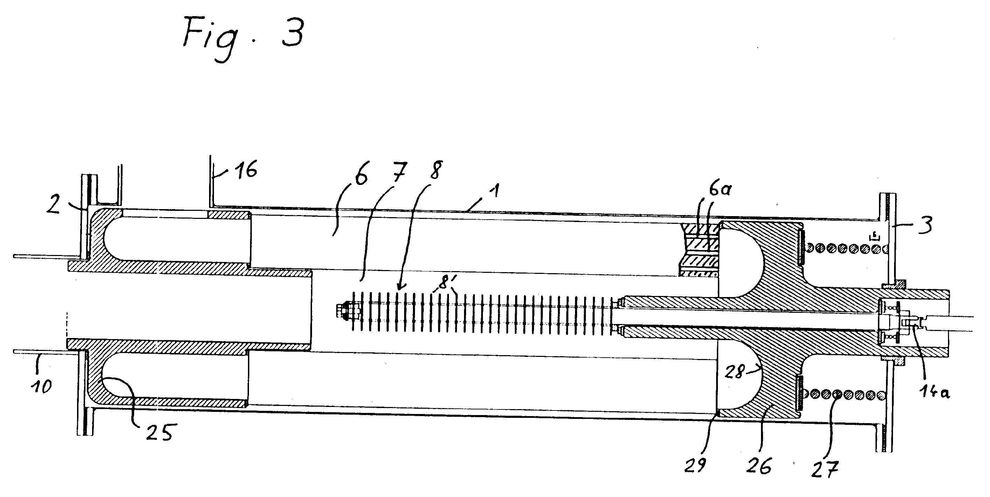

In der Fig. 3 ist eine gegenüber der Fig. 1 geringfügig modifizierte Ausführungsvariante dargestellt. An den Stutzen 10 schließt ein keramischer Gasverteilungskörper 25 an. Dieser bewirkt einen strömungstechnisch optimalen Übergang aus dem Filter in den Austrittsstutzen 16. Eventuelle Ablagerungen von nicht abgeschiedenen Partikeln werden durch die Gasströmung selbst abtransportiert. Die Hochspannungsdurchführung 26 ist im wesentlichen aus einem einzigen Keramikteil aufgebaut, der von einer Feder 27 gegen den Wabenkörper 6 gepreßt wird. Die Spannvorrichtung 14 dient nur zur Fixierung der Elektrode 8 in der Hochspannungsdurchführung 26. Die dem Gasstrom zugewendete Seite der Hochspannungsdurchführung 26 ist als halbe Torusfläche 28 möglichst glatt ausgebildet, um die Ablagerung von Partikeln möglichst zu verhindern. Partikel, die sich dennoch ablagern, werden von der Strömung, die sich an der torusförmigen Wand eng anlegt, relativ rasch abgetragen. Die Hochspannungsdurchführung 26 ist mit einer hochtemperaturfesten Dichtung 29 gegenüber dem Wabenkörper 6 abgedichtet. Wie bei der Ausführungsvariante von Fig. 1 ist zwischen der Elektrode 8 und dem geerdeten Gehäuse 1 nur ein einziges elektrisches Feld vorgesehen.

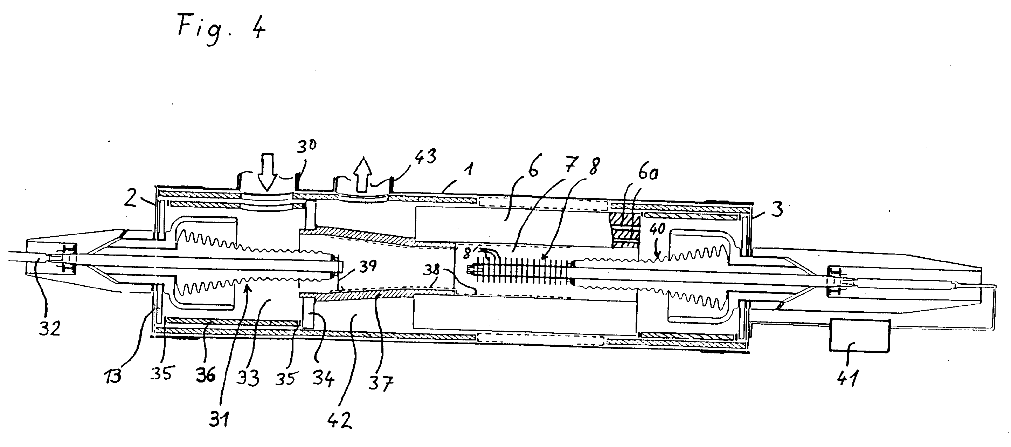

In Fig. 4 ist eine weitere Variante der Erfindung dargestellt. Das Abgas strömt über einen lateral angeordneten Eintrittsstutzen 30 in den Filter. In dem diesem Eintrittsstutzen 30 benachbarten Deckel 2 ist eine Hochspannungsdurchführung 31 angeordnet, die in ihrem Aufbau der Hochspannungsdurchführung 9 von Fig. 1 entspricht. An der dieser Hochspannungsdurchführung 31 zugeordneten Anschlußklemme 32 wird jedoch eine positive Hochspannung angelegt. Die über den Eintrittsstutzen 30 in den Filter eingeströmten Abgase gelangen zunächst in die die Hochspannungsdurchführung 31 umschließende Kammer 33. Diese Kammer 33 wird von der Isolierscheibe 13, einem Keramikrohr 36 und einer Abschlußplatte 34 begrenzt, welche mit hochtemperaturfesten Dichtungen 35 abgedichtet sind. In einer Öffnung der Abschlußplatte 34 ist ein Keramikrohr 37 eingesetzt, das die Verbindung zum Ionisationskanal 7 des Wabenkörpers 6 herstellt. An der Innenseite des Ionisationskanals 7 ist eine Elektrode 38 aufgebracht, die über ein Verbindungsstück 39 mit der Anschlußklemme 32 verbunden ist. Die vom gegenüberliegenden Ende in den Ionisationskanal 7 hineinragende Elektrode 8 ist an Masse geschaltet. Dadurch wird erreicht, daß die Sprühelektroden 8' der Elektrode 8 eine negative Potentialdifferenz gegenüber der mit ihnen zusammenwirkenden Elektrode 38 aufweisen, was wesentlich für die Ionisation ist. Das Gehäuse 1 ist geerdet und baut zusammen mit der Elektrode 38 das elektrische Feld für die Abscheidung der Partikel auf. Die Elektrode 8 ist über eine Hochspannungsdurchführung 40 im Deckel 3 verankert und elektrisch über einen Regler 41 mit Masse verbunden. Die gereinigten Abgase gelangen nach dem Durchströmen der Abscheidekanäle 6a in die Ausströmkammer 42 und verlassen den Filter über den Austrittsstutzen 43.

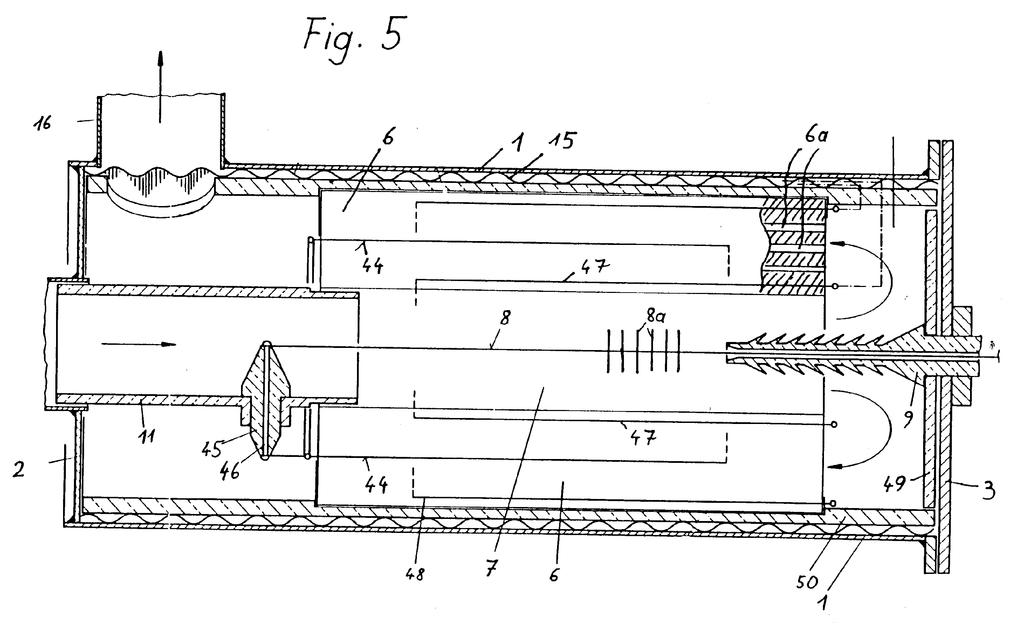

In der Fig. 5 ist ein Filter dargestellt, bei dem im Wabenkörper 6 eine Reihe von bandförmigen Elektroden 44 vorgesehen sind.

Diese sind über eine in einer Stütze 45 vorgesehenen Verbindung 46 elektrisch mit der Elektrode 8 verbunden, die auf negativem Potential liegt. Die Stütze 45 ist im Keramikrohr 11 verankert. Im Bereich des Ionisationskanals 7 ist eine weitere, an Masse liegende Elektrode 47 vorgesehen. Weiters kann im äußeren Bereich des Wabenkörpers 6 eine an Masse liegende Elektrode 48 angeordnet sein. Es ist jedoch offensichtlich, daß auch das Gehäuse 1 die Aufgabe dieser Elektrode 48 übernehmen kann. Durch die relativ kleinen Abstände zwischen den Elektroden kann bei dieser Ausführungsvariante schon mit relativ geringen Spannungen von 8 bis 12 kV das Auslangen gefunden werden. Dadurch kann auch die Hochspannungsdurchführung 9 sehr einfach aufgebaut sein. Der Deckel 3 ist mit einer Keramikplatte 49 isoliert. Nach außen ist der Wabenkörper 6 mit einem Keramikrohr 50 und einer Isolationsschicht 15 isoliert.

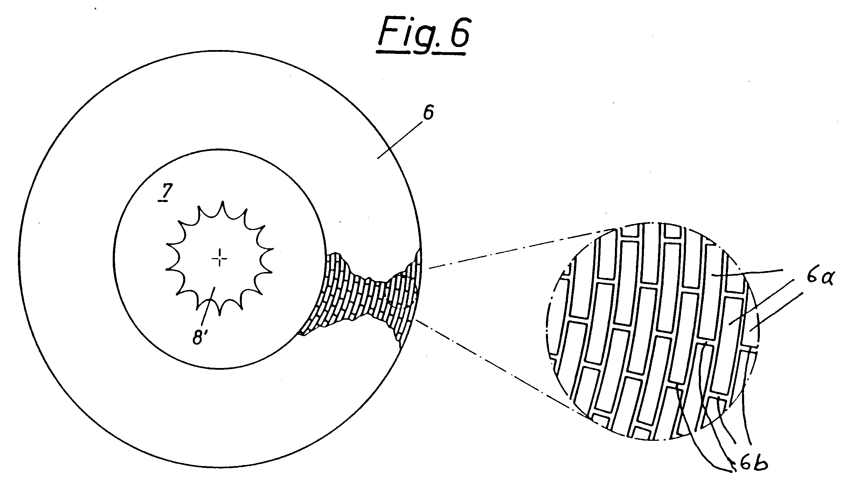

Aus der Fig. 6 ist der prinzipielle Aufbau des keramischen Wabenkörpers 6 zu ersehen. Die Darstellung ist für alle Ausführungsvarianten der Fig. 1 bis 5 gültig, wobei jedoch die diversen Elektroden mit Ausnahme der Sprühelektroden 8' nicht dargestellt sind. Der keramische Wabenkörper 6 weist eine Vielzahl von über dessen gesamte Länge durchgehenden Kanälen 6a auf, die durch schmale Stege 6b und im wesentlichen konzentriscn zueinander angeordnete Rippen 6c voneinander getrennt sind. Diese radial aneinander angrenzenden Kanäle 6a sind in Umfangsrichtung gegeneinander versetzt angeordnet, sodaß sich ein einer Ziegelmauer entsprechendes Bild ergibt, wie dies ausschnittweise aus der Detaildarstellung zu ersehen ist. So wird der Weg des elektrischen Stromes verlängert und der elektrische Gesamtwiderstand des Keramikkörpers 6 vergrößert.

## Patentansprüche

1. Vorrichtung zur Reinigung von Abgasen von Partikeln, insbesonders zur Entfernung von Rußpartikeln aus dem Abgas von luftverdichtenden Brennkraftmaschinen, mit:
- mindestens einem Ionisationskanal (7), zur Erzeugung negativer Ionen;
- Abscheidekanälen (6a), die im wesentlichen parallel und vorzugsweise koaxial zum Ionisationskanal (7) angeordnet sind, in denen die Partikel an Wänden der Abscheidekanäle (6a) angelagert und abgebrannt werden;
- Mitteln zur Erzeugung mindestens eines elektrisches Feldes quer zur Strömungsrichtung der Abgase;
dadurch gekennzeichnet, daß Mittel (9b; 28; 49) zur Umlenkung des Abgasstromes vorgesehen sind, die die aus dem Ionisationskanal (7) strömenden Gase unter Umkehrung der Strömungsrichtung in die Abscheidekanäle (6a) lenken.

2. Vorrichtung nach Anspruch 1, dadurch gekennzeichnet, daß Elektroden (8) zur Erzeugung eines einzigen elektrischen Feldes vorgesehen sind, dessen Feldlinien sowohl den Ionisationskanal (7) als auch die Abscheidekanäle (6a) durchsetzen.

3. Vorrichtung nach Anspruch 1, dadurch gekennzeichnet, daß Elektroden (8, 44, 47, 48) zur Erzeugung zweier elektrischer Felder vorgesehen sind, von denen eines den Ionisationskanal (7) und das andere die Abscheidekanäle (6a) durchsetzt.

4. Vorrichtung nach einem der Ansprüche 1 bis 3, dadurch gekennzeichnet, daß die Potentialdifferenz der elektrischen Felder zwischen 3 und 30 kV, vorzugsweise zwischen 5 und 20 kV liegt.

5. Vorrichtung nach einem der Ansprüche 1 bis 4, dadurch gekennzeichnet, daß die Feldstärke der elektrischen Felder zwischen 100 und 1000 V/mm, vorzugsweise zwischen 200 und 500 V/mm liegt.

6. Vorrichtung nach einem der Ansprüche 1 bis 5, dadurch gekennzeichnet, daß eine Einrichtung zu Einbringen eines luftgetragenen Katalysators vorgesehen ist, die diesen dann einbringt, wenn die Temperatur des Abgasstromes über eine Zeit t hinweg kleiner als A°C ist, wobei t zwischen 20 und 60 Minuten liegt und A kleiner als 500°C, vorzugsweise kleiner als 300°C ist.

7. Vorrichtung nach einem der Ansprüche 1 bis 6, dadurch gekennzeichnet, daß sowohl der Ionisationskanal (7) als auch die Abscheidekanäle (6a) als beidseitig offene Kanäle in einem einzelnen Keramikkörper angeordnet sind.

8. Vorrichtung nach Anspruch 7, dadurch gekennzeichnet, daß der Keramikkörper (6) aus einem im wesentlichen gasdichten Material besteht.

9. Vorrichtung nach einem der Ansprüche 7 oder 8, dadurch gekennzeichnet, daß der Keramikkörper (6) im wesentlichen zylindrisch aufgebaut ist, wobei der Ionisationskanal (7) im Bereich der Zylinderachse angeordnet ist und die Abscheidekanäle (6a) um den Ionisationskanal (7) angeordnet sind.

10. Vorrichtung nach einem der Ansprüche 1 bis 9, dadurch gekennzeichnet, daß die Abscheidekanäle (6a) einen im wesentlichen rechteckigen Querschnitt aufweisen, wobei die längere Seite quer zur Richtung des elektrischen Feldes orientiert ist und wobei das Verhältnis zwischen Länge und Breite zwischen 4:1 und 10:1 beträgt.

11. Vorrichtung nach einem der Ansprüche 1 bis 10, dadurch gekennzeichnet, daß die Abscheidekanäle (6a) zueinander versetzt angeordnet sind.

12. Vorrichtung nach einem der Ansprüche 1 bis 11, dadurch gekennzeichnet, daß die Wände der Abscheidekanäle (6a) mit einem Katalysator beschichtet sind, der die Oxidation von Kohlenwasserstoffen begünstigt.

13. Vorrichtung nach Anspruch 12, dadurch gekennzeichnet, daß Teile der Wände der Abscheidekanäle (6a) mit einem Katalysator beschichtet sind, der die Oxidation von Kohlenwasserstoffen begünstigt und daß andere Teile der Wände der Abscheidekanäle (6a) mit einem weiteren, reduzierenden Katalysator beschichtet sind.

14. Vorrichtung nach einem der Ansprüche 1 bis 13, dadurch gekennzeichnet, daß zwei Elektroden (8) vorgesehen sind, die folgendermaßen angeordnet sind:
- Im Inneren des Ionisationskanals (7) befindet sich eine vorzugsweise mit zahnscheibenförmigen Sprühelektrode (8') ausgestattete Elektrode (8);
- An der äußeren Mantelfläche des Keramikkörpers (6) ist eine an Masse geschaltete Elektrode vorgesehen, die vorzugsweise vom Gehäuse (1) gebildet ist. (Fig. 1, Fig. 3)

15. Vorrichtung nach einem der Ansprüche 1 bis 13, dadurch gekennzeichnet, daß die Elektroden (8, 44, 47, 48) folgendermaßen angeordnet sind:
- Im Inneren des Ionisationskanals (7) befindet sich eine vorzugsweise mit zahnscheibenförmigen Sprühelektrode (8') ausgestattete Elektrode (8);
- An der Wand des Ionisationskanals (7) befindet sich eine an Masse geschaltete Elektrode (47);
- Zwischen den Abscheidekanälen (6a) ist mindestens eine Feldelektrode (44) angeordnet;
- An der äußeren Mantelfläche des Keramikkörpers (6) ist vorzugsweise eine an Masse geschaltete Elektrode (48) vorgesehen. (Fig. 5)

16. Vorrichtung nach Anspruch 15, dadurch gekennzeichnet, daß die Sprühelektrode (8) und die Feldelektrode (44) an einem gemeinsamen Potential anliegen.

17. Vorrichtung nach einem.der Ansprüche 1 bis 13, dadurch gekennzeichnet, daß die Elektroden (8, 18) folgendermaßen angeordnet sind:
- Im Inneren des Ionisationskanals (7) befindet sich eine vorzugsweise zahnscheibenförmige Sprühelektrode (8), die im wesentlichen an Masse geschaltet ist;
- An der Wand des Ionisationskanals (7) befindet sich eine an ein positives Hochspannungspotential schaltbare Elektrode (18).

18. Keramikkörper für eine Vorrichtung nach einem der Ansprüche 1 bis 17, dadurch gekennzeichnet, daß zentral ein Ionisationskanal (7) vorgesehen ist, und daß parallel zu diesem Ionisationskanal (7) eine Vielzahl von Abscheidekanälen (6a) angeordnet sind.

## Claims

1. Device for removing particles from exhaust gases, particularly for removing soot particles from the exhaust gas of air-compressing internal combustion engines, with:
- at least one ionising duct (7) for generating negative ions;
- separator ducts (6a) disposed substantially parallel to and preferably coaxial with the ionising duct (7), and in which the particles are deposited on walls of the separator ducts (6a) and are burned off;
- means for generating at least one electrical field transversely to the flow direction of the exhaust gases;
characterised in that means (9b; 28; 49) for deflecting the flow of exhaust gas are provided, which guide the gases flowing out of the ionising duct (7), reversing the flow direction into the separator ducts (6a).

2. Device according to claim 1, characterised in that electrodes (8) for generating a single electrical field are provided, whose field lines pass through both the ionising duct (7) and the separator ducts (6a).

3. Device according to claim 1, characterised in that electrodes (8, 44, 47, 48) for generating two electrical fields are provided, of which one passes through the ionising duct (7) and the other the separator ducts (6a).

4. Device according to one of claims 1 to 3, characterised in that the potential difference of the electrical fields lies between 3 and 30 kV, preferably between 5 and 20 kV.

5. Device according to one of claims 1 to 4, characterised in that the field strength of the electrical fields lies between 100 and 1000 V/mm, preferably between 200 and 500 V/mm.

6. Device according to one of claims 1 to 5, characterised in that an arrangement is provided for introducing an air-borne catalyst, said arrangement introducing said catalyst when the temperature of the exhaust gas flow has been less than A degrees C for a period of time t, t lying between 20 and 60 minutes, and A being less than 500 degrees C, preferably less than 300 degrees C.

7. Device according to one of claims 1 to 6, characterised in that both the ionising duct (7) and the separator ducts (6a) are disposed in a single ceramic member as ducts which are open at both ends.

8. Device according to claim 7, characterised in that the ceramic member (6) comprises a substantially gastight material.

9. Device according to one of claims 7 or 8, characterised in that the ceramic member (6) is substantially cylindrical in structure, the ionising duct (7) being located in the region of the cylinder axis, and the separator ducts (6a) being disposed around the ionising duct (7).

10. Device according to one of claims 1 to 9, characterised in that the separator ducts (6a) have a substantially rectangular cross-section, the longer side being oriented transversely to the direction of the electrical field, and the ratio between length and width being between 4:1 and 10:1.

11. Device according to one of claims 1 to 10, characterised in that the separator ducts (6a) are offset to one another.

12. Device according to one of claims 1 to 11, characterised in that the walls of the separator ducts (6a) are coated with a catalyst which favours the oxidation of hydrocarbons.

13. Device according to claim 12, characterised in that portions of the walls of the separator ducts (6a) are coated with a catalyst which favours the oxidation of hydrocarbons, and in that other portions of the walls of the separator ducts (6a) are coated with a further, reducing catalyst.

14. Device according to one of claims 1 to 13, characterised in that two electrodes (8) are provided, which are disposed as follows:
- in the interior of the ionising duct (7) there is located an electrode (8) preferably fitted with gearwheel-shaped emission electrodes (8');
- on the outer cover surface of the ceramic member (6) there is provided an electrode, connected to earth, and which is preferably formed by the casing (1) (Fig. 1, Fig. 3);.

15. Device according to one of claims 1 to 13, characterised in that the electrodes (8, 44, 47, 48) are disposed as follows:
- in the interior of the ionising duct (7) there is located an electrode (8) preferably fitted with gearwheel-shaped emission electrodes (8');
- on the wall of the ionising duct (7) there is located an electrode (47) connected to earth;
- between the separator ducts (6a) there is located at least one field electrode (44);
- on the outer cover surface of the ceramic member (6) there is preferably located an electrode (48) connected to earth (Fig. 5).

16. Device according to claim 15, characterised in that the emission electrode (8) and the field electrode (44) are applied to a common potential.

17. Device according to one of claims 1 to 13, characterised in that the electrodes (8, 18) are disposed as follows:
- in the interior of the ionising duct (7) there is located a preferably gearwheel-shaped emission electrode (8) which is substantially connected to earth;
- on the wall of the ionising duct (7) there is located an electrode (18) which may be connected to a positive high-tension potential.

18. Ceramic member for a device according to one of claims 1 to 17, characterised in that an ionising duct (7) is provided centrally, and in that a plurality of separator ducts (6a) are disposed parallel to this ionising duct (7).

## Revendications

1. Dispositif de purification de particules provenant de gaz d'échappement, en particulier d'élimination de particules de suie provenant du gaz d'échappement de machines à combustion à compression d'air, comprenant :
- au moins un canal (7) d'ionisation pour la production d'ions négatifs ;
- des canaux (6a) de séparation disposés sensiblement parallèlement et de préférence coaxialement au canal d'ionisation (7), dans lesquels les particules sont déposées sur les parois des canaux (6a) de séparation et réduites en cendre ;
- des moyens de génération d'au moins un champ électrique perpendiculaire à la direction du flux des gaz d'échappement ;
caractérisé en ce que sont prévus des moyens (9b ; 28 ; 49) de retournement du flux des gaz d'échappement, qui dirigent les gaz provenant du canal (7) d'ionisation dans les canaux (6a) de séparation, en inversant la direction du flux.

2. Dispositif selon la revendication 1, caractérisé en ce que sont prévues des électrodes (8) en vue de produire un champ électrique unique dont les lignes de champ englobent non seulement le canal (7) d'ionisation, mais encore les canaux (6a) de séparation.

3. Dispositif selon la revendication 1, caractérisé en ce que sont prévues des électrodes (8, 44, 47, 48) pour la production de deux champs électriques dont l'un englobe le canal (7) d'ionisation, et l'autre englobe les canaux (6a) de séparation.

4. Dispositif selon l'une des revendications 1 à 3, caractérisé en ce que la différence de potentiel entre les champs électriques se situe entre 3 et 30 kV, de préférence entre 5 et 20 kV.

5. Dispositif selon l'une des revendications 1 à 4, caractérisé en ce que l'intensité des champs électriques se situe entre 100 et 1000 V/mm, de préférence entre 200 et 500 V/mm.

6. Dispositif selon l'une des revendications 1 à 5, caractérisé en ce qu'est prévu un équipement d'apport d'un catalyseur dont le support est l'air, qui apporte ce catalyseur quand la température du flux de gaz d'échappement après un temps t est inférieur à A°C, t se situant entre 20 et 60 minutes et A étant inférieur à 500°C, de préférence inférieur à 300°C.

7. Dispositif selon l'une des revendications 1 à 6, caractérisé en ce que non seulement le canal (7) d'ionisation mais également les canaux (6a) de séparation sont disposés comme des canaux ouverts des deux côtés disposés dans un corps unique en céramique.

8. Dispositif selon la revendication 7, caractérisé en ce que le corps (6) en céramique se compose essentiellement d'un matériau imperméable au gaz.

9. Dispositif selon l'une des revendications 7 ou 8, caractérisé en ce que le corps (6) en céramique est construit de manière sensiblement cylindrique, le canal (7) d'ionisation étant disposé dans la zone de l'axe du cylindre et les canaux (6a) de séparation étant disposés autour du canal (7) d'ionisation.

10. Dispositif selon l'une des revendications 1 à 9, caractérisé en ce que les canaux (6a) de séparation présentent une section transversale sensiblement rectangulaire, le côté le plus long étant orienté perpendiculairement à la direction du champ électrique et le rapport entre la longueur et la largeur se situant entre 4:1 et 10:1.

11. Dispositif selon l'une des revendications 1 à 10, caractérisé en ce que les canaux (6a) de séparation sont disposés décalés les uns par rapport aux autres.

12. Dispositif selon l'une des revendications 1 à 11, caractérisé en ce que les parois des canaux (6a) de séparation sont recouvertes d'un catalyseur qui favorise l'oxydation des hydrocarbures.

13. Dispositif selon la revendication 12, caractérisé en ce que des portions des parois des canaux (6a) de séparation sont recouvertes au moyen d'un catalyseur favorisant l'oxydation des hydrocarbures, et que d'autres portions des parois des canaux (6a) de séparation sont recouvertes avec un autre catalyseur de réduction.

14. Dispositif selon l'une des revendications 1 à 13, caractérisé en ce que sont prévues deux électrodes (8) disposées de la façon suivante :
- à l'intérieur du canal (7) d'ionisation se trouve une électrode (8) équipée de préférence d'électrodes (8') d'émission en forme de disque denté ;
- sur la surface extérieure du corps (6) en céramique est prévue une électrode reliée à la masse, qui est construite de préférence à partir du logement (1). (Fig. 1, Fig. 3)

15. Dispositif selon l'une des revendications 1 à 13, caractérisé en ce que les électrodes (8, 44, 47, 48) sont disposées de la manière suivante :
- à l'intérieur du canal (7) d'ionisation se trouve une électrode (8) équipée de préférence d'électrodes (8') d'émission sous forme de disque denté ;
- sur la paroi du canal (7) d'ionisation se trouve une électrode (47) reliée à la masse ;
- entre les canaux (6a) de séparation est disposée au moins une électrode (44) de champ ;
- sur la surface extérieure du corps (6) en céramique est prévu de préférence une électrode (48) reliée à la masse. (Fig. 5)

16. Dispositif selon la revendication 15, caractérisé en ce que l'électrode d'émission (8) et l'électrode de champ (44) se trouvent à un potentiel identique.

17. Dispositif selon l'une des revendications 1 à 13, caractérisé en ce que les électrodes (8, 18) sont disposées de la façon suivante :
- à l'intérieur du canal (7) d'ionisation se trouve une électrode (8) d'émission de préférence sous la forme de disque denté, sensiblement reliée à la masse ;
- sur la paroi du canal (7) d'ionisation se trouve une électrode susceptible d'être reliée à un potentiel à haute tension.

18. Corps céramique pour la réalisation d'un dispositif selon l'une des revendications 1 à 17, caractérisé en ce qu'est prévu un canal (7) central d'ionisation, et en ce que sont disposés parallèlement à ce canal (7) d'ionisation une pluralité de canaux (6) de séparation.
